# EUROPÄISCHE PATENTSCHRIFT

(11) **EP 2 505 325 B1**
(45) Veröffentlichungstag und Bekanntmachung des Hinweises auf die Patenterteilung: **27.11.2013**
(21) Anmeldenummer: 12160982.0
(22) Anmeldetag: 23.03.2012
(51) Int. Cl.: B27N 7/00, B27D 5/00, B32B 3/02, B29C 63/00, B27G 1/00

(54) **Verfahren zum Anbringen von Kantenstreifen an einem plattenförmigen Verbundformteil**
Method for applying edge strips to a board-shaped compound moulded part
Procédé de mise en place de bandes de rebords sur une pièce de formage composite en forme de plaques

(30) Priorität: 31.03.2011 DE 102011001696
(43) Veröffentlichungstag der Anmeldung: 03.10.2012
(73) Patentinhaber: Werzalit GmbH + Co. KG, 71720 Oberstenfeld (DE)
(72) Erfinder: Koza, Michael, 38122 Braunschweig (DE); Kunz, Burkhard, 71717 Beilstein (DE)
(74) Vertreter: 2K Patentanwälte Blasberg Kewitz & Reichel

(56) Entgegenhaltungen:
- EP-A1- 2 251 171
- EP-A2- 2 093 031
- DE-A1- 19 921 134
- DE-A1- 19 940 329
- DE-C1- 19 947 164
- DE-U1- 29 806 945

## Beschreibung

Die Erfindung betrifft ein Verfahren zum Anbringen von Kantenstreifen an einem plattenförmigen Verbundformteil nach dem Oberbegriff des Anspruchs 1. Ein solches Verfahren ist aus der DE 1 823 823 U bekannt.

Verfahren zur Herstellung von plattenförmigen Verbundformteilen die aus einem Trägermaterial bestehen, das durch Verpressen eines nicht fließfähigen Gemisches von Span- und/oder Faserwerkstoffen und wärmehärtbaren Bindemitteln gefertigt ist und das mit einer äußeren Beschichtung versehen ist, sind umfänglich bekannt. Insbesondere sind Verfahren bekannt, bei denen solche Verbundformteile durch Verwendung von beleimten, zerkleinerten organischen Faserstoffen in einem Presswerkzeug unter Druck und Temperaturzufuhr zu einem Trägermaterial gepresst werden, wobei das Trägermaterial mit einer äußeren Beschichtung versehen wird, die mindestens eine Seite (Oberseite und/oder Unterseite) und mindestens eine Kante, häufig die stirnseitige Kante, des plattenförmigen Verbundformteils bedeckt.

Die Anmelderin selbst hat hierzu in mehreren Patentanmeldungen Lösungen offenbart. Zu nennen ist hier beispielsweise die DE 44 305 28 A1, worin ein Verfahren und eine Vorrichtung zur Herstellung von Formteilen umfassend offenbart ist.

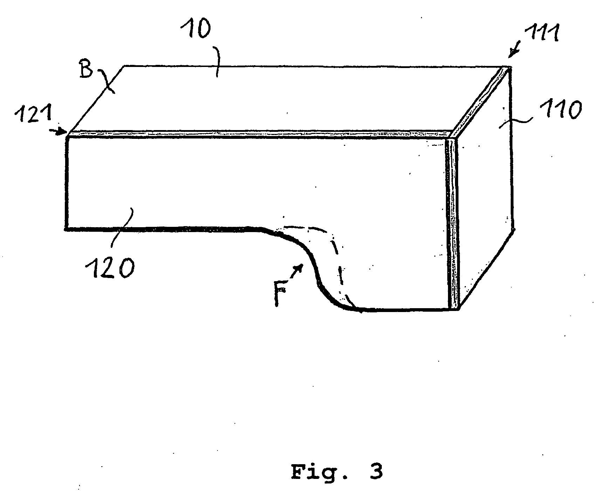

Aus der DE 199 40 329 A1 ist ein Verfahren zum Befestigen von Deckleisten auf den Schmalseiten von Möbelplatten bekannt, die z.B. beschichtete Span- oder Faserplatten sein können. Die Möbelplatte entspricht somit einem plattenförmigen Verbundformteil bestehend aus einem Trägermaterial (siehe inneren Aufbau der Spanplatte mit "Schmalseite 2" in Fig. 3), das durch Verpressen eines nicht fließfähigen Gemisches von Span- und/oder Faserwerkstoffen und wärmehärtbaren Bindemitteln gefertigt ist und das mit einer äußeren Beschichtung (beschichtete "Spanplatte 1") versehen ist, wobei die Beschichtung mindestens eine Seite und mindestens eine Kante des plattenförmigen Verbundformteils bedeckt. Dabei ist ein aus Kunststoff oder Furnier bestehender Kantenstreifen ("Deckleiste 3") an dem plattenförmigen Verbundformteil angebracht ist, der eine Materialdicke aufweist, die um ein Vielfaches größer als die Materialdicke der Beschichtung ist.

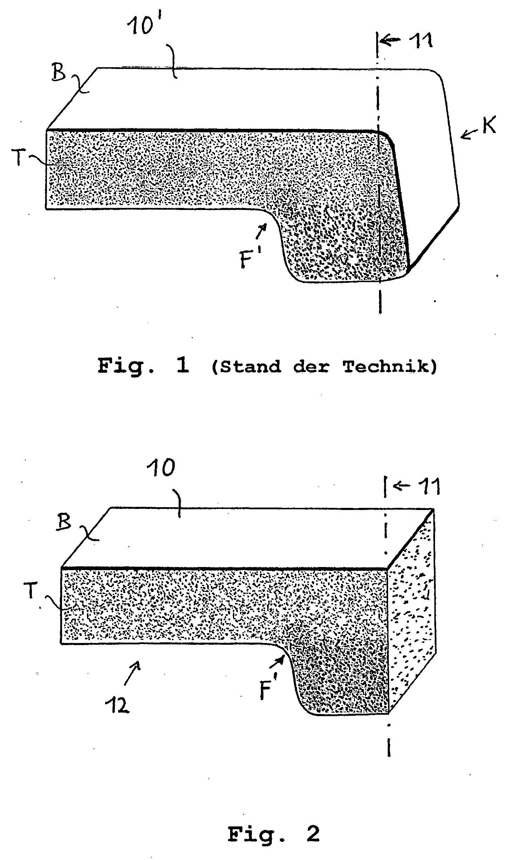

Aus der DE 199 21 134 A1 ist bekannt, an der Schmalfläche eines Plattenelementes mittels einer Kantenanleimmaschine einen bandförmigen Belag anzuleimen. Dazu ist ein Andruckelement (s. Fig. 1) der Kantenanleimmaschine als Gleitschuh ausgebildet, der einen linienartigen Kontaktbereich aufweist. Dadurch werden beim Anleimen querlaufende Wellen auf der Oberfläche des angeklebten Belages vermieden, und es wird eine besonders dichte Klebstofffuge erzielt.

Weiterhin ist aus der EP 0956936 A1 insbesondere die Konstruktion einer Mehrzweckpresse zur Herstellung von Formteilen bekannt. In der DE 1823823 U wird ein als Fensterbank gestaltetes plattenförmiges Verbundformteil beschrieben, das im Innern ein Trägermaterial aus mit Kunstharzen verpressten Holzspänen aufweist und an seiner Oberfläche mit einer wetterfesten, beständigen und pflegeleichten sowie dekorativen Beschichtung versehen ist, die aus Kunststoff oder aus wärmegehärteten kunstharzgetränkten Papieren oder Furnieren bestehen kann.

In der Fig. 1 ist der Aufbau eines solchen als Fensterbank ausgestalteten plattenförmigen Verbundformteils 10' dargestellt. Zur Vereinfachung der Darstellung werden nur eine seitliche Kante sowie die stirnseitige Kante K gezeigt, die eine nasenförmige Formgebung aufweist. Das Verbundformteils 10' besteht im Wesentlichen aus einem Trägermaterial T, das durch Verpressen eines nicht fließfähigen Gemisches von Span- und/oder Faserwerkstoffen und wärmehärtbaren Bindemitteln gefertigt worden ist und somit eine hohe Beständigkeit gegen Verzug aufweist. Die Oberseite des Verbundformteils 10' sowie die gezeigte stirnseitige Kante K (Vorderkante) sind mit einer Beschichtung B versehen, die ein Dekor aufweisen kann. Die Beschichtung B dient auch der Versiegelung des inneren Trägerkerns T. Die Unterseite ist mit einer anderen Beschichtung versehen, die im Wesentlichen zur Versiegelung des inneren Trägerkerns T dient und kein Dekor aufweist. Der dargestellte Schichtaufbau des plattenförmigen Verbundformteils 10' gilt auch für andere Formgebungen, wie z.B. für Tischplatten oder Arbeitsplatten. Die oberseitige und insbesondere die stirnseitige Beschichtung B sind einer höheren Belastung ausgesetzt als die unterseitige Beschichtung. Es wäre daher wünschenswert zumindest die stirnseitige Beschichtung zu verstärken, um die dortige Vorderkante K resistenter gegen mechanische Stöße und Schläge zu machen.

Bei herkömmlichen Spanplatten ist es an sich bekannt, die Kanten mittels Kantenstreifen, auch Umleimer genannt, zu verstärken. Hierzu werden beispielsweise sog. ABS-Kanten, d.h. Umleimer aus Acrylnitril-Butadien-Styrol-Copolymerisat verwendet.

Aufgabe der Erfindung ist es, ein Verfahren zum Anbringen von Kantenstreifen an einem plattenförmigen Verbundformteil vorzuschlagen, das aus einem Trägermaterial besteht, welches durch Verpressen eines nicht fließfähigen Gemisches von Span- und/oder Faserwerkstoffen und wärmehärtbaren Bindemitteln gefertigt ist und welches mit einer äußeren Beschichtung versehen ist, wobei die Beschichtung mindestens eine Seite und mindestens eine Kante des plattenförmigen Verbundformteils bedeckt.

Gelöst wird die Aufgabe durch ein Verfahren mit den Merkmalen das Anspruchs 1.

Demnach wird ein Verfahren mit den folgenden Schritten vorgeschlagen:
Abtrennen der beschichteten Kante, so dass das darunter liegende Trägermaterial freiliegt und eine planare Kantenfläche ausbildet;
Aufbringen eines aus Kunststoff oder Furnier bestehenden Kantenstreifens auf die planare Kantenfläche, wobei der Kantenstreifen eine Materialdicke aufweist, die um ein Vielfaches größer als die Materialdicke der Beschichtung ist.

Somit wird durch die Erfindung ein effizientes Verfahren bereit gestellt, das es ermöglicht, beschichtete plattenförmige Formteile mit verstärkten Kantenstreifen zu versehen. Das Aufbringen von Kanten steigert die Festigkeit des Verbundformteils und bewahrt es vor mechanischen Schlägen und Stößen. Außerdem können passend zu den gewünschten Farb- und Dekor-Anforderungen entsprechende Kanten angebracht werden.

Weitere Vorteile ergeben sich aus den Unteransprüchen.

Vorzugsweise weist das nach dem Verfahren hergestellte plattenförmige Verbundformteil seitliche Kantenflächen auf, an die weitere Kantenstreifen angebracht werden. Wenn die seitlichen Kantenflächen eine erste Kontur aufweisen, können die die weiteren Kantenstreifen eine davon abweichende zweite Kontur aufweisen, insbesondere eine solche Kontur, welche die erste Kontur überlappt. Dadurch können die seitlichen Kantenstreifen mit beliebigen Konturen angebracht werden, wobei durch die Überlappung eine Anschlagsfläche für den jeweiligen seitlichen Kantenstreifen gebildet wird.

Vorzugsweise besteht der mindestens eine Kantenstreifen aus einem synthetischen Terpolymer, insbesondere aus Acrylnitril-Butadien-Styrol-Copolymerisat. Der jeweilige Kantenstreifen kann mittels eines Schmelzklebers mit dem Trägermaterial verbunden werden und kann eine Materialdicke von 0,5 bis 5 mm, insbesondere von 1 bis 4 mm, aufweisen. Die Beschichtung des Trägermaterials kann eine deutlich geringere Materialdicke von 0,2 bis 2 mm, insbesondere von 0,5 bis 1 mm, aufweisen.

Nachfolgend wird nun die Erfindung anhand eines Ausführungsbeispiels und unter Bezugnahme auf die beiliegenden Figuren näher beschrieben, wobei die Figuren folgende schematische Darstellungen wiedergeben:
- Fig. 1: zeigt als Ausgangspunkt der Erfindung ein herkömmliches plattenförmiges Verbundformteil in Gestalt einer Fensterbank, die aus einem beschichteten Trägermaterial besteht;
- Fig. 2: zeigt das nach dem Verfahren hergestellte plattenförmige Verbundformteil, bei dem eine der beschichteten Kanten (die Vorderkante) abgefräst worden ist;
- Fig. 3: zeigt das plattenförmige Verbundformteil nach Fig. 2, bei dem an der abgefrästen Vorderkante ein gerader (rechteckförmiger) Kantenstreifen angebracht worden ist und bei dem an der seitlichen Kante ein kurvengeformter Kantenstreifen angebracht worden ist; und
- Fig. 4: zeigt ein schematisches Ablaufdiagram für ein erfindungsgemäßes Verfahren zum Anbringen von Kantenstreifen, welches auch durch die Fig. 2 und 3 veranschaulicht wird.

Da ausgehend von der Figur 1 die Figuren 2 bis 4 die einzelnen Schritte des erfindungsgemäßen Verfahrens veranschaulichen, wird nachfolgend auf alle Figuren 1 bis 4 Bezug genommen.

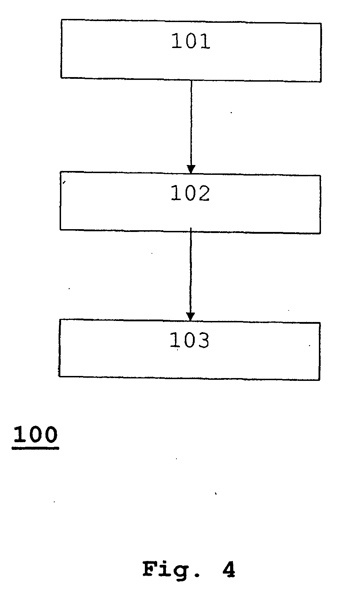

Als Ausgangspunkt des erfindungsgemäßen Verfahrens 100 (s. Fig. 4) wird von einem Verbundformteil 10' (s. Fig. 1) ausgegangen, das als Fensterbank ausgebildet ist und im Inneren ein Trägermaterial T bestehend aus einem verpresstem Gemisch aus duroplastischem, mit feinen Holzfasern vermischten Material aufweist. Das Trägermaterial T ist in nach dem von der Anmelderin entwickelten Herstellungsverfahren zu einem festen plattenförmigen Gebilde unter Druck und Hitze geformt worden, wobei die äußeren Flächen (Unterseite und Oberseite) beschichtet worden sind. Das Trägermaterial T kann aus beliebigen feinen Spänen und/oder Fasern bestehen, die mit einem Bindemittel wirkendem duroplastischen oder auch thermoplastischen Material in ein Presswerkzeug gefüllt werden, um dort unter Druck und Wärmezufuhr bei etwa 120 bis 175 Grad Celsius verpresst zu werden. Die Beschichtung des Trägermaterials T kann alle Seiten und Kanten betreffen oder auch nur bestimmte Seiten und Kanten betreffen. Im Beispiel der in Fig. 1 gezeigten Fensterbank 10` sind Oberseite und Vorderkante K mit einer dekorativen Beschichtung B versehen; die Unterseite ist mit einer nicht dekorierten und rein funktionell ausgelegten Beschichtung versehen.

Um nun die Fensterbank mit robusteren und ggf. anderen dekorartigen Kantenstreifen zu versehen, wird zunächst in einem ersten Schritt 101 (s. Fig. 4) die beschichtete Vorderkante Kante K (s. Fig. 1 und 2) so abgetrennt, dass das darunter liegende Trägermaterial T freiliegt und eine planare Kantenfläche 11 sich ausbildet. Vorzugsweise wird dazu die Vorderkante K planar abgefräst, wobei ein rechtwinkliger Winkel zur Plattenoberfläche eingehalten wird. Jeder andere Winkel, vorzugsweise zwischen 45 und 135 Grad, ist möglich. Auch kann ein leicht konkaves oder konvexes Abfräsen durchgeführt werden, um eine nicht-planare Kante zu erhalten. Die abgefräste Vorderkante 11 (s. Fig. 2) ist somit unbeschichtet, ebenso wie die seitlichen Kanten 12.

In einem weiteren Schritt 102 (s. Fig. 4) wird dann auf die Seitenkanten 12 und auf die Vorderkante 11 jeweils ein Kantenstreifen 110 bzw. 120 aufgebracht. Die Kantenstreifen (Umleimer) bestehen aus Kunststoff, können aber auch aus Furnier oder dergleichen bestehen, und weisen eine Materialdicke auf, die um ein Vielfaches größer als die Materialdicke der Beschichtung B ist.

Anschließend werden überstehende Kantengrate 111 bzw. 121 entfernt (s. Fig. 3 sowie Schritt 103 in Fig. 4). Die entgrateten Kantenstreifen weisen eine Materialdicke von beispielsweise 0,5 - 5,0 mm auf. Die Beschichtung B auf der Oberseite weist eine Materialdicke von lediglich 0,2 - 2,0 mm auf. Die Kantenstreifen 110 bzw. 120 können auch angefast werden. Als Kantenstreifen können beispielsweise sog. ABS-Kanten verwendet werden, die aus dem synthetischen Terpolymer Acrylnitril-Butadien-Styrol-Copolymerisat (Kurzzeichen ABS) bestehen. Die ABS-Kanten sind z.B. mit einem Schmelzkleber versehen, der die Verbindung zu dem (freigelegten) Trägermaterial T herstellt.

Wie die Fig. 3 zeigt, kann die Fensterbank 10 auch an den seitlichen Kanten mit ABS-Kanten versehen werden, wobei die Kontur F der jeweiligen ABS-Kante 120 nicht identisch zur Kontur F` des Trägermaterials T (s. Fig. 2) sein muss. In dem gezeigten Bespiel ragt die Kontur F der ABS-Kante etwas hervor und ist an ästhetische Anforderungen angepasst. Dadurch dass die Kontur F gegenüber der Kontur F' hervorsteht, kann die ABS-Kante 120 auch als Anschlagkante beim Einbau der Fensterbank 10 dienen und/oder kann Befestigungsmittel (Beschläge) verdecken. Die in Fig. 2 dargestellte abgefräste Vorderkante 11 kann, je nach Anforderung, in einem beliebigen Winkel, vorzugsweise 45-90 Grad, abgefräst werden. Die ABS-Kanten 110 und 120 können farbig gestaltet sein und gegenüber der oberseitigen Beschichtung B einen optischen Kontrast darstellen. Sehr viele Variationsmöglichkeiten sind denkbar.

Anstelle von Fensterbänken können jede Arten von plattenförmigen Verbundformteilen, wie z.B. Arbeitsplatten oder Tischplatten, mit Kantenstreifen versehen werden. Es können einzelne Kanten wie auch alle Kanten (vorderseitige, rückseitige und beide seitlichen Kanten) mit Kantenstreifen, insbesondere ABS-Kanten versehen werden.

### Bezugszeichenliste

- 10': herkömmliches Verbundformteil in Gestalt einer Fensterbank
- T: Trägermaterial
- K: Vorderkante (Stirnseite)
- B: Beschichtung auf der Oberseite und Vorderkante (Materialdicke ca. 0,2 - 2,0 mm)

- 10: nach dem Verfahren bearbeitetes Verbundformteil mit abgefräster Vorderkante
- 11: abgefräste Vorderkante bzw. Stirnseite
- 12: Seite mit Kontur F' (Fensterbankkontur)

- 110: stirnseitig aufgebrachter Kantenstreifen (ABS-Kante)
- 120: seitlich aufgebrachter Kantenstreifen (ABS-Kante)
- F: Kontur der seitlichen ABS-Kante

- 111, 121: stirnseitig bzw. seitlich abgefaste Kanten (Materialdicke ca. 0,5 - 5,0 mm)

## Patentansprüche

1. Verfahren (100) zum Anbringen von Kantenstreifen (110, 120) an einem plattenförmigen Verbundformteil (10) bestehend aus einem Trägermaterial (T), das durch Verpressen eines nicht fließfähigen Gemisches von Span- und/oder Faserwerkstoffen und wärmehärtbaren Bindemitteln gefertigt ist und das mit einer äußeren Beschichtung (B) versehen ist, wobei die Beschichtung (B) mindestens eine Seite und mindestens eine Kante (K) des plattenförmigen Verbundformteils (10) bedeckt, **gekennzeichnet durch** folgende Schritte:
Abtrennen der beschichteten Kante (K), so dass das darunter liegende Trägermaterial (T) freiliegt und eine planare Kantenfläche (11) ausbildet (Schritt 101);
Aufbringen eines aus Kunststoff oder Furnier bestehenden Kantenstreifens (110) auf die planare Kantenfläche (11), wobei der Kantenstreifen eine Materialdicke aufweist, die um ein Vielfaches größer als die Materialdicke der Beschichtung (B) ist (Schritt 102).

2. Verfahren (100) nach Anspruch 1, **dadurch gekennzeichnet, dass** das plattenförmige Verbundformteil (10) seitliche Kantenflächen (12) aufweist, an die weitere Kantenstreifen (120) angebracht werden (Schritt 103).

3. Verfahren (100) nach Anspruch 2, **dadurch gekennzeichnet, dass** die seitliche Kantenflächen (12) eine Kontur (F') aufweisen und dass die weiteren Kantenstreifen (120) eine davon abweichende Kontur (F) aufweisen, insbesondere eine die Kontur (F`) der seitlichen Kantenflächen überlappende Kontur (F) aufweisen.

4. Verfahren (100) nach einem der vorhergehenden Ansprüche, **dadurch gekennzeichnet, dass** der mindestens eine Kantenstreifen (110, 120) aus einem synthetischen Terpolymer, insbesondere aus Acrylnitril-Butadien-Styrol-Copolymerisat besteht.

5. Verfahren (100) nach einem der vorhergehenden Ansprüche, **dadurch gekennzeichnet, dass** der mindestens eine Kantenstreifen (110, 120) mittels eines Schmelzklebers mit dem Trägermaterial (T) verbunden wird.

6. Verfahren (100) nach einem der vorhergehenden Ansprüche, **dadurch gekennzeichnet, dass** der mindestens eine Kantenstreifen (110, 120) eine Materialdicke von 0,5 bis 5 mm, insbesondere von 1 bis 4 mm, aufweist.

7. Verfahren (100) nach einem der vorhergehenden Ansprüche, **dadurch gekennzeichnet, dass** die Beschichtung (B) des Trägermaterials (T) eine Materialdicke von 0,2 bis 2 mm, insbesondere von 0,5 bis 1 mm, aufweist.

8. Verfahren (100) nach einem der vorhergehenden Ansprüche, **dadurch gekennzeichnet, dass** im übergangsbereich zwischen dem jeweiligen Kantenstreifen (110, 120) und der Beschichtung (B) überstehendes Material des Kantenstreifens (110) abgetragen wird, insbesondere durch Anbringen einer Fase (111, 121) abgetragen wird (Schritt 103).

## Claims

1. A method (100) for attaching edge strips (110, 120) to a plate-shaped composite molded part (10) consisting of a substrate (T) which is made by compression of a non-flowable mixture of chip and/or fiber materials and heat-hardenable binding agents, and which is provided with an outer coating (B), wherein the coating (B) covers at least one side and at least one edge (K) of the plate-shaped composite molded part (10),
**characterized by** the steps of:
separating the coated edge (K) so that the underlying substrate (T) is exposed and forms a planar edge surface (11) (step 101);
attaching a plastic or veneer edge strip (110) to the planar edge surface (11), wherein the edge strip has a material thickness which is several times greater than the material thickness of the coating (B) (step 102).

2. The method (100) according to claim 1, **characterized in that** the plate-shaped composite molded part (10) has lateral edge surfaces (12) to which other edge strips (120) are attached (step 103).

3. The method (100) according to claim 2, **characterized in that** the lateral edge surfaces (12) have a contour (F'), and that the further edge strips (120) have a deviating contour (F), in particular a contour (F') that overlaps the contour (F) of the lateral edge surfaces.

4. The method (100) according to one of the preceding claims, **characterized in that** at least the one edge strip (110, 120) consists of a synthetic terpolymer, in particular acrylonitrile-butadiene-styrene copolymer.

5. The method (100) according to one of the preceding claims, **characterized in that** at least the one edge strip (110, 120) is connected to the substrate (T) by means of a hot-melt adhesive.

6. The method (100) according to one of the preceding claims, **characterized in that** at least the one edge strip (110, 120) has a material thickness of 0.5 to 5 mm, especially 1 to 4 mm.

7. The method (100) according to one of the preceding claims, **characterized in that** the coating (B) of the substrate (T) has a material thickness of 0.2 to 2 mm, especially from 0.5 to 1 mm.

8. The method (100) according to one of the preceding claims, **characterized in that** in the transition region between the respective edge strips (110, 120) and the coating (B), the protruding material of the edge strip (110) is removed, in particular by applying a beveling (111, 121) (step 103).

## Revendications

1. Procédé (100) pour la fixation des bandes de bord (110, 120) pour une pièce moulée composite en forme de plaque (10) constituée d'un substrat (T), qui est préparé par compression d'un mélange non fluide de puce et/ou de matières fibreuses et des agents de liaison durcissables sous l'effet de la chaleur, et qui est pourvu d'un revêtement externe (B), dans lequel le revêtement (B) recouvre au moins un côté et au moins une arête (K) de la pièce moulée composite en forme de plaque (10),
**caractérisé par** les étapes consistant à:
séparant le bord revêtu (K) de sorte que le substrat sous-jacent (T) se trouve exposé et forme une surface de bordure plane (11) (étape 101) ;
la fixation d'une matière plastique ou d'une bande de bord de parement (110) à la surface de bordure plane (11), dans lequel la bande de bord présente une épaisseur de matériau qui est plusieurs fois supérieure à l'épaisseur de matériau du revêtement (B) (étape 102).

2. Le procédé (100) selon la revendication 1, **caractérisé en ce que** la pièce moulée composite en forme de plaque (10) présente des surfaces de bord latérales (12) auxquelles sont fixées (étape 103) d'autres bandes de bord (120).

3. Le procédé (100) selon la revendication 2, **caractérisé en ce que** les surfaces des bords latérales (12) présentent un contour ( '), et que les autres bandes de bord (120) ont un contour de déviation (F), en particulier un contour (F') chevauchant le contour (F) des surfaces de bord latérales.

4. Le procédé (100) selon l'une quelconque des revendications précédentes **caractérisé en ce qu'**au moins une des bandes de bord (110, 120) est constituée d'un terpolymère synthétique, en particulier un copolymère d'acrylonitrile -butadiène-styrène.

5. Le procédé (100) selon l'une quelconque des revendications précédentes, **caractérisé en ce qu'**au moins l'une bande de bord (110, 120) est reliée au substrat (T ) au moyen d'un adhésif thermofusible.

6. Le procédé (100) selon l'une quelconque des revendications précédentes, **caractérisé en ce qu'**au moins l'une bande de bord (110, 120) présente une épaisseur de matériau de 0,5 à 5 mm , en particulier de 1 à 4 mm.

7. Le procédé (100) selon l'une quelconque des revendications précédentes, **caractérisé en ce que** le revêtement (B ) du substrat (T ) présente une épaisseur de matériau de 0,2 à 2 mm , en particulier de 0,5 à 1 mm.

8. Le procédé (100) selon l'une quelconque des revendications précédentes, **caractérisé en ce que** dans la zone de transition entre les bandes latérales respectives (110, 120) et le revêtement (B), la matière en saillie de la bande de bord (110) est supprimée , en particulier par application d'un biseautage (111, 121) (étape 103).
